# DEMANDE DE BREVET EUROPEEN

(11) **EP 2 172 841 A1**
(43) Date de publication de la demande: **07.04.2010**
(21) Numéro de dépôt: 09305930.1
(22) Date de dépôt: 01.10.2009
(51) Int. Cl.: G06F 9/445

(54) **Procédé de redémarrage d'une application par un automate**

(30) Priorité: 01.10.2008 FR 0856648
(71) Demandeur: Converteam Technology Ltd, Rugby Warwickshire CV21 1BU (GB)
(72) Inventeur: Begey, Michel, 90300 Offemont (FR)
(74) Mandataire: Domenego, Bertrand

(57) **Abrégé**

L'invention concerne un procédé de redémarrage d'une application par un automate.

Ce procédé comprend les étapes consistant :
- lors de chaque téléchargement d'une liste de commandes de l'application, à modifier (32, 33) dans une mémoire morte de l'automate un fichier "app.ini" d'initialisation de l'application comportant une liste de commandes codées ;
- lors de la mise sous tension de l'automate, à lire et à décoder (41, 42) les commandes codées du fichier "app.ini", à mémoriser (43) les commandes correspondant aux commandes codées dans la liste de commandes de l'application, et à exécuter (51) les commandes de la liste.

## Description

La présente invention concerne un procédé de redémarrage d'une application par un automate.

On sait que le programme "application" d'un automate est téléchargé, à partir du serveur TCP/IP de l'automate, en mémoire "vive" de sorte qu'il est perdu en cas de coupure de tension. Il doit donc être rechargé après chaque mise sous tension.

Dans les équipements existants, un dispositif de redémarrage de l'application est basé sur l'utilisation de mémoires "mortes" (EPROM ou EEPROM), ce qui nécessite une série d'opérations manuelles de la part du programmeur :
- Programmation des EPROM (ou EEPROM) ;
- Ecriture de la séquence de démarrage ;
- Installation de ces deux éléments dans l'automate ;

Il en résulte également une perte importante de temps lors de l'installation des équipements pour mettre en place cette fonction, ce qui doit être refait chaque fois qu'une modification du programme application a été faite.

Ces phases étant très lourdes, elles ne sont souvent pas ou sont mal faites. Suite à un redémarrage de l'automate, l'application ne redémarre donc pas automatiquement (ou pas correctement).

D'autre part, une erreur de programmation n'est pas toujours visible au moment de l'installation de la fonction de redémarrage, car tester le redémarrage d'un automate dans le contexte de production de l'utilisateur est parfois impossible.

La présente invention vise à pallier ces inconvénients.

Plus particulièrement, l'invention a pour but de fournir une fonction capable de recharger automatiquement le programme "application" d'un automate après chaque mise sous tension.

Plus particulièrement également, l'invention a pour but de fournir un moyen très simple pour installer cette fonction sans opération supplémentaire de la part du programmeur.

A cet effet, l'invention a tout d'abord pour objet un procédé de redémarrage d'une application par un automate comprenant les étapes consistant :
- lors du téléchargement d'une liste des commandes de l'application, à créer sur une mémoire morte de l'automate, un fichier "app.ini" des commandes codées ;
- lors de la mise sous tension de l'automate, à lire et à décoder les commandes du fichier "app.ini" des commandes codées, à mémoriser ces commandes dans la liste, et à exécuter les commandes de la liste.

Dans un mode de mise en oeuvre particulier, le procédé selon l'invention comprend en outre une étape de mise à jour du fichier "app.ini" des commandes codées lors du téléchargement de nouvelles commandes de la liste des commandes.

L'invention a également pour objet un produit programme d'ordinateur, comprenant un jeu d'instructions aptes à la mise en oeuvre du procédé tel que décrit ci-dessus, lorsqu'il est exécuté par une unité de traitement informatique.

L'invention est donc fondée sur un apprentissage de la séquence de redémarrage lors des phases de téléchargement du programme de l'application.

Au redémarrage, l'automate n'a plus qu'à "rejouer" les commandes de chargement de l'application, comme si elles avaient été déclenchées par le programmeur.

Comme la fonction de mémorisation est couplée à la fonction de téléchargement, le programmeur n'a aucune opération supplémentaire à réaliser.

L'invention assure également la mise à jour automatique de la mémorisation de l'application. On est ainsi assuré que la dernière application chargée sera relancée au prochain redémarrage.

On décrira maintenant, à titre d'exemple non limitatif, un mode de réalisation particulier de l'invention, en référence aux dessins schématiques annexés dans lesquels :
- la figure 1 est une illustration d'ensemble du procédé selon l'invention ;
- la figure 2 est un organigramme de la fonction "Mémorisation des commandes dans un fichier (script_write)"
- la figure 3 est un organigramme de la fonction "Ajout d'une nouvelle commande (script_add)"
- la figure 4 est un organigramme de la fonction "Relecture fichier de commandes (script_init)"
- la figure 5 est un organigramme de la fonction "Rejeu des commandes enregistrées (script_play)"

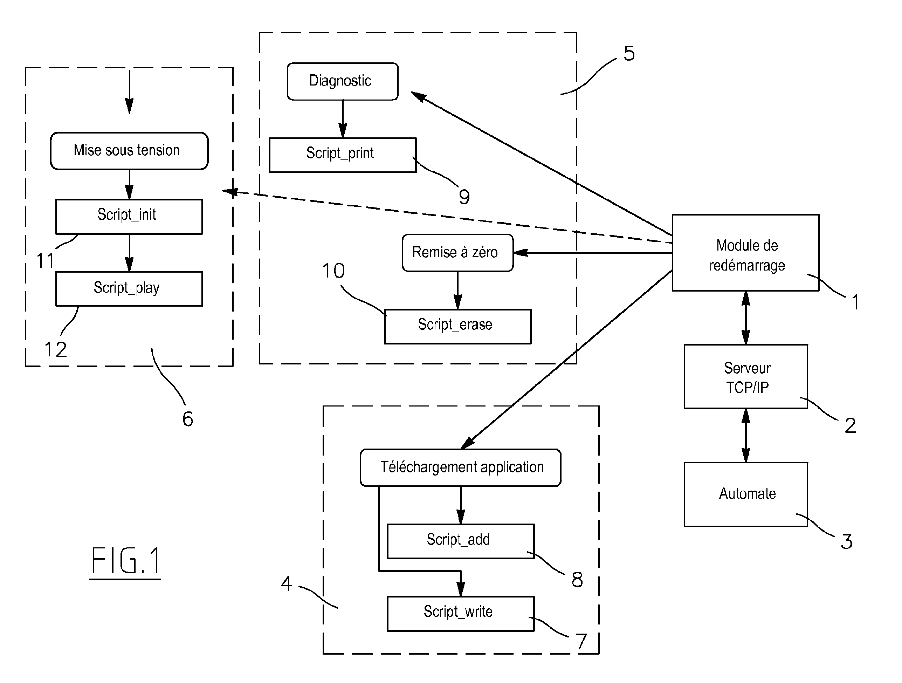

Comme montré à la figure 1, le module de redémarrage 1 est connecté au serveur TCP/IP 2 de l'automate 3, par lequel transitent les commandes de chargement des applications.

Le module de redémarrage est ici constitué de fonctions de téléchargement de l'application 4, de fonctions de "service" 5 et de fonctions de redémarrage proprement dit 6.

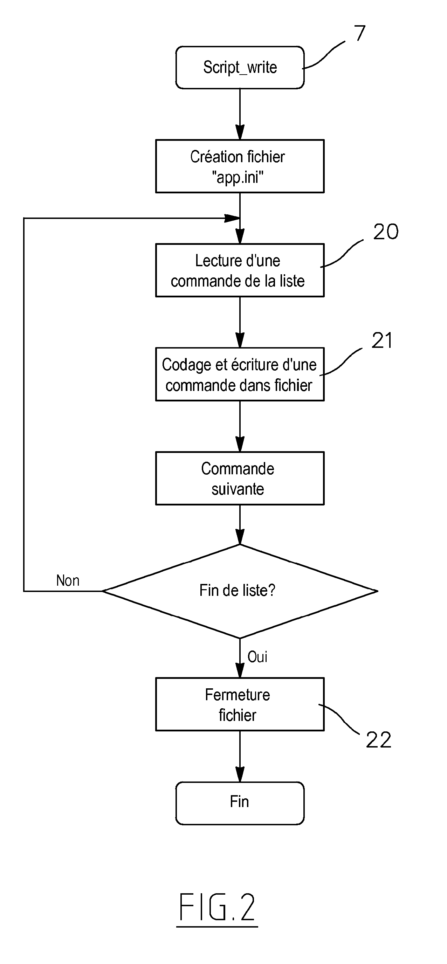

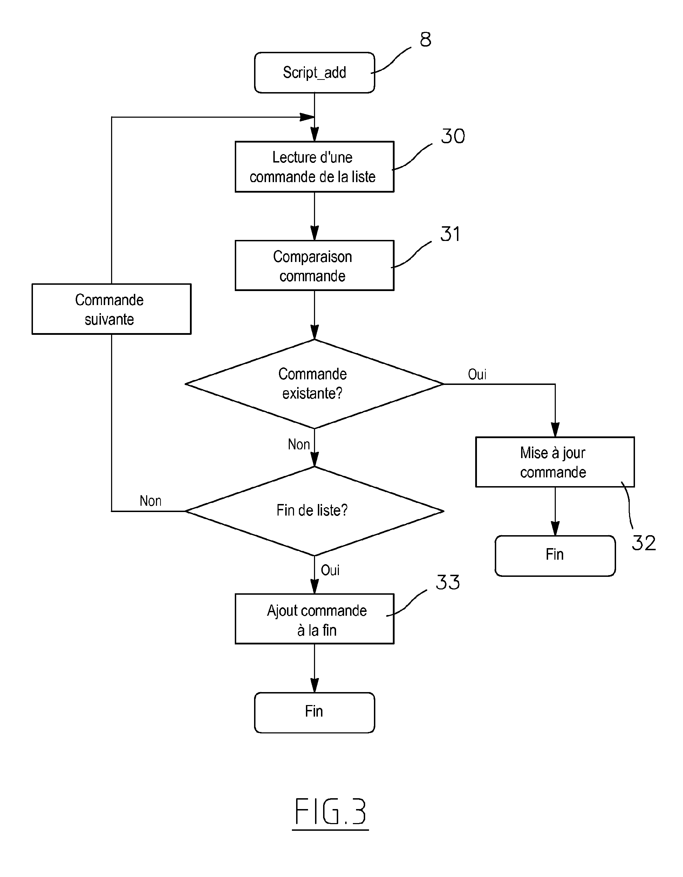

Les fonctions 4 de téléchargement de l'application comprennent la fonction 7 de mémorisation des commandes dans un fichier (script_write) et la fonction 8 d'ajout d'une nouvelle commande (script_add). Ces fonctions seront décrites en détail ci-après en référence aux figures 2 et 3.

Les fonctions de "service" 5 comprennent la fonction 9 d'affichage de la liste des commandes (script_print) qui est une fonction de mise au point, permettant au programmeur de voir ce qui a déjà été mémorisé par l'automate, et la fonction 10 d'effacement complet de la liste (script_erase) qui permet de remettre à zéro le mécanisme de mémorisation (après mise en oeuvre de cette fonction, aucune application ne redémarrera à la remise sous tension de l'automate).

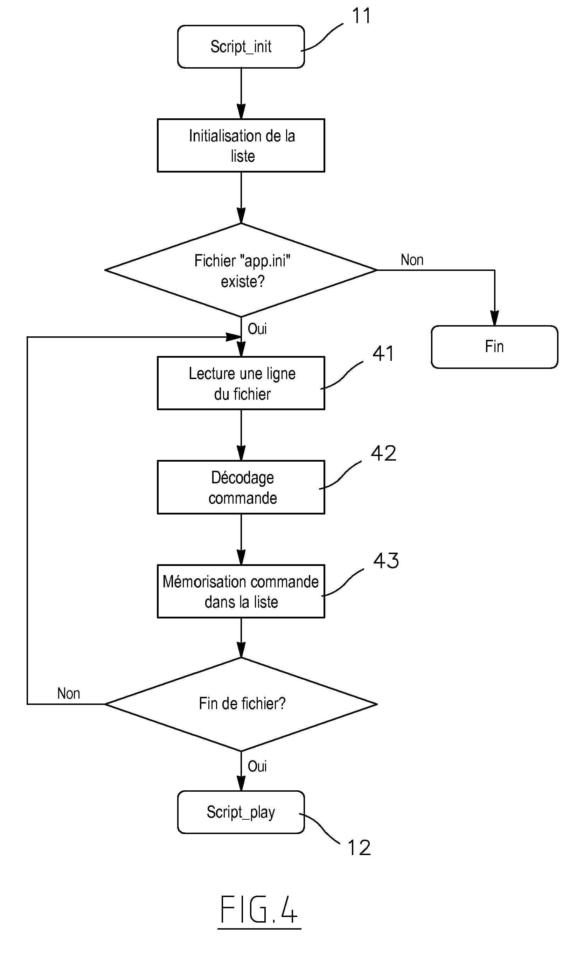

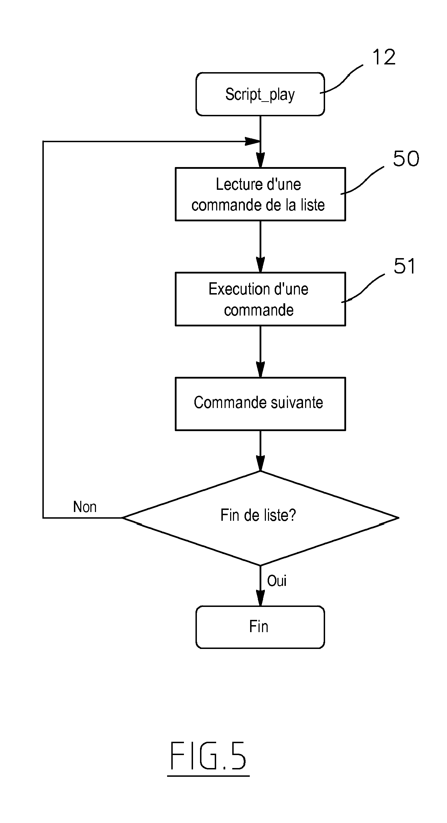

Les fonctions de redémarrage proprement dit 6 comprennent la fonction 11 de relecture fichier de commandes (script_init) qui permet de retrouver après une réinitialisation de l'automate la séquence de démarrage de l'application, et la fonction 12 de rejeu des commandes enregistrées (script_play). Ces fonctions seront décrites en détail ci-après en référence aux figures 4 et 5.

Si l'on se réfère maintenant à la figure 2, la fonction 7 de mémorisation des commandes dans un fichier (script_write) débute lors de la création d'un fichier d'initialisation d'une application "app.ini". Une commande de la liste est lue en 20, puis elle est codée et écrite dans le fichier en 21. Ce processus est poursuivi jusqu'à la fin de la liste après quoi le fichier est fermé en 22.

Les commandes sont donc codées et mémorisées dans un fichier "app.ini" situé sur un disque de l'automate. Cette fonction assure la rémanence de la séquence de démarrage.

La figure 3 illustre la fonction 8 d'ajout d'une nouvelle commande (script_add). Lorsqu'une commande de la liste est lue en 30, une comparaison est effectuée en 31 pour déterminer s'il s'agit d'une commande existante. Si la commande existe, elle est mise à jour en 32. Dans le cas contraire, elle est ajoutée à la fin du fichier en 33.

Cette fonction est activée chaque fois que le programmeur télécharge un nouveau composant de l'application dans l'automate. Si la commande n'existe pas encore dans le fichier, elle est ajoutée à la fin du fichier. Sinon, l'enregistrement précédemment effectué est mis à jour.

La fonction 11 de relecture fichier de commandes (script_init) est illustrée à la figure 4. Elle débute par une initialisation de la liste en 40. Si un fichier existe, on lit en 41 les lignes du fichier, on décode les commandes en 42 et on les mémorise en 43.

Cette fonction permet donc de retrouver, après une réinitialisation de l'automate, la séquence de démarrage de l'application. Elle relit le fichier "app.ini" préalablement mémorisé, décode les différentes commandes codées et lance la fonction 12 de rejeu des commandes enregistrées (script_play).

Cette fonction 12 de rejeu des commandes enregistrées (script_play) est illustrée à la figure 5. Elle consiste en premier lieu à lire en 50 chaque commande de la liste, puis à l'exécuter en 51.

Cette fonction est lancée au cours du redémarrage de l'automate, et réactive donc les commandes de chargement des composants de l'application.

## Revendications

1. Procédé de redémarrage d'une application comportant une liste de commandes à exécuter par un automate, **caractérisé par le fait qu'**il comprend les étapes consistant :
- lors de chaque téléchargement d'une liste de commandes de l'application, à modifier (32, 33) dans une mémoire morte de l'automate un fichier "app.ini" d'initialisation de l'application comportant une liste de commandes codées ;
- lors de la mise sous tension de l'automate, à lire et à décoder (41, 42) les commandes codées du fichier "app.ini", à mémoriser (43) les commandes correspondant aux commandes codées dans la liste de commandes de l'application, et à exécuter (51) les commandes de la liste.

2. Procédé selon la revendication 1, la modification (32, 33) du fichier « app.ini » consistant, pour chaque commande codée correspondant à une commande respective de la liste téléchargée, à ajouter (33) à la fin du fichier « app.ini » la commande codée lorsqu'elle n'existe pas encore dans le fichier « app.ini », ou à mettre à jour (32) la commande codée lorsqu'elle existe déjà dans le fichier « app.ini ».

3. Produit programme d'ordinateur, **caractérisé par le fait qu'**il comprend un jeu d'instructions aptes à la mise en oeuvre du procédé selon l'une quelconque des revendications 1 et 2, lorsqu'il est exécuté par une unité de traitement informatique.
